# EUROPEAN PATENT APPLICATION

(11) **EP 4 697 485 A2**
(43) Date of publication of application: **18.02.2026**
(21) Application number: 25191447.9
(22) Date of filing: 24.07.2025
(51) Int. Cl.: H01M 50/533, H01M 4/13, H01M 10/0585, H01M 10/42, H01M 50/586, H01M 50/59, H01M 50/591, H01M 50/595

(54) **ELECTRODE ASSEMBLY AND ELECTROCHEMICAL DEVICE**

(30) Priority: 24.07.2024 CN 202411001927
(71) Applicant: Ningde Amperex Technology Ltd., Ningde City, Fujian Province 352100 (CN)
(72) Inventor: LIN, Sen, Ningde City, Fujian Province, China, 352100 (CN); HUANG, Chu, Ningde City, Fujian Province, China, 352100 (CN)
(74) Representative: Icosa

(57) **Abstract**

This application relates to the field of battery technologies, and discloses an electrode assembly (100) and an electrochemical device. The electrode assembly (100) includes: a first electrode plate (10), a second electrode plate (30), and a separator (20) arranged therebetween, where the first electrode plate (10) includes a first current collector (11) and a first active material layer (12), the first current collector (11) includes a first main body portion (111) and a first empty foil portion (112), and the first empty foil portion (112) extends along a first direction (X) to form a tab of the first electrode plate (10); and the first active material layer (12) is arranged in the first main body portion (111), the first active material layer (12) is provided with a first accommodating groove (121) concave along a second direction (Y), and the first direction (X) is perpendicular to the second direction (Y); and a first protective layer (40), including a first part and a second part, where the first part is arranged in the first accommodating groove (121), and the second part is arranged on a surface of the first empty foil portion (112). In the electrode assembly (100), the first accommodating groove (121) is provided on a part of the first active material layer (12) close to the first empty foil portion (112) to accommodate a part of the first protective layer (40), so that a height of the first protective layer (40) protruding from the first active material layer (12) can be reduced in a thickness direction, to reduce a thickness of the electrode assembly (100).

## Description

### TECHNICAL FIELD

Embodiments of this application relate to the field of battery technologies, and in particular, to an electrode assembly and an electrochemical device.

### BACKGROUND

In an existing electrode assembly, a section of empty foil is cut off from each of positive and negative electrode plates, to serve as a tab to perform electrical connection, and empty aluminum foil at a root of a positive tab is directly opposite to the negative electrode plate. When a burr appears on an edge of the negative electrode plate, there is a risk of puncturing a separator, causing a short circuit due to direct contact with the positive empty aluminum foil. In addition, separator shrinkage when the electrode assembly falls also causes an empty foil area of the positive tab to be in direct contact with a negative active material, causing a short circuit and fire, which has a large potential safety risk. To resolve this kind of problem, an existing protection manner is to directly set a protective layer on a tab and an active material layer, where the protective layer covers the tab and the active material layer. As a result, an overall thickness of an electrode plate is increased, and energy density of the electrode assembly is reduced.

### SUMMARY

Embodiments of this application mainly provide an electrode assembly and an electrochemical device, to resolve the technical problem, so that a head thickness of the electrode assembly can be effectively reduced and energy density of the electrode assembly can be effectively increased.

A technical solution adopted in embodiments of this application is as follows: An electrode assembly is provided, and includes a first electrode plate, a separator, a second electrode plate, and a first protective layer. The separator is arranged between the first electrode plate and the second electrode plate. The first electrode plate includes a first current collector and a first active material layer, the first current collector includes a first main body portion and a first empty foil portion, the first empty foil portion has a first end and a second end that are opposite to each other in a first direction, the first end of the first empty foil portion is connected to the first main body portion, the second end of the first empty foil portion extends in a direction away from the first main body portion, the first direction is an extension direction of the first empty foil portion, and the first empty foil portion constitutes a tab of the first electrode plate. The first active material layer is arranged on at least one surface of the first main body portion along a second direction, the second direction is a thickness direction of the first current collector, the first direction is perpendicular to the second direction, and the first active material layer is provided with a first accommodating groove concave along the second direction. The first protective layer includes a first part and a second part, where the first part is arranged in the first accommodating groove, and the second part is arranged on a surface of the first empty foil portion.

In the electrode assembly according to this application, an electrochemical reaction between an area that corresponds to the first empty foil portion and that is located on the second electrode plate and the first empty foil portion can be prevented by arranging the part of the first protective layer on the first empty foil portion. Besides, by arranging the part of the first protective layer on the first active material layer, it can be ensured that an area between the first empty foil portion and the first active material layer can also be covered with the first protective layer. In addition, by accommodating the part of the first protective layer in the first accommodating groove arranged on the first active material layer, a height of the first protective layer protruding from the first active material layer in the second direction of the first electrode plate can be effectively reduced, thereby decreasing a head thickness of the electrode assembly and increasing energy density of the electrode assembly.

In some embodiments, along the second direction, a depth H1 of the first accommodating groove and a thickness H2 of the first active material layer satisfy: H1 < H2, and the first active material layer delimits a bottom wall of the first accommodating groove. By retaining a part of the first active material layer at the bottom of the first accommodating groove, when the part of the first protective layer is arranged in the first accommodating groove, the first protective layer can completely cover a boundary between the first active material layer and the first empty foil portion, so as to avoid ineffective protective effect of the first protective layer caused by exposure of a part of the first empty foil portion due to a gap between the first protective layer and the first active material layer.

In some embodiments, the depth H1 of the first accommodating groove satisfies: 5 µm ≤ H1 ≤ 2000 µm; and the thickness H2 of the first active material layer satisfies: 20 µm ≤H2 ≤ 5000 µm. In some embodiments, the depth H1 of the first accommodating groove satisfies: 5 µm ≤ H1 ≤ 100 µm; and the thickness H2 of the first active material layer satisfies: 20 µm ≤ H2 ≤ 200 µm. By setting the depth of the first accommodating groove to be within the range described above, the first accommodating groove can have an accommodation capability in the second direction, thereby reducing the height of the first protective layer protruding from the first active material layer in the second direction. By setting the thickness of the first active material layer to be within the above range, not only the first active material layer can have an enough thickness space for arranging a structure of the first accommodating groove, but also an overall thickness of the first electrode plate can be controlled, thereby controlling an overall weight of the first electrode plate. In addition, a case in which the first active material layer close to the first current collector cannot participate in an electrochemical reaction when the first active material layer is too thick can be prevented.

In some embodiments, viewed along the second direction, a width K1 of the first empty foil portion, a width K2 of the first protective layer, and a width K3 of the first accommodating groove in a third direction satisfy: K1 ≤ K2 ≤ K3, and the first direction, the second direction, and the third direction are perpendicular to each other. The width of the first accommodating groove is greater than or equal to the width of the first protective layer, so that the first protective layer can be completely accommodated in the first accommodating groove in the third direction, so as to avoid increase of a thickness in the second direction caused by the first protective layer covering an area not provided with the first accommodating groove. The width of the first protective layer is greater than or equal to the width of the first empty foil portion, so that the first protective layer can completely cover the first empty foil portion in the third direction, thereby avoiding exposure of the first empty foil portion, and improving safety performance of the first electrode plate.

In some embodiments, along the third direction, the first main body portion and at least one side of the first empty foil portion and the first active material layer are spaced apart to form a clearance space. When the first empty foil portion is connected to a middle area of the first main body portion in the third direction, along the third direction, two sides of the first accommodating groove both have first active material layers; and clearance spaces are both provided between the first main body portion and two sides of the first empty foil portion. When the first empty foil portion is arranged in an edge area of the first main body portion, that is, an edge of the first empty foil portion in the third direction coincides with an edge of the first main body portion in the third direction; and along the third direction, one side of the first accommodating groove is connected to the first active material layer, and the other side of the first accommodating groove is flush with an edge of the first electrode plate.

By arranging the clearance space between the first empty foil portion and the first main body portion in the third direction, a root of the first empty foil portion can be located in the first main body portion, so that a plurality of tabs (first empty foil portions) of a plurality of first electrode plates can be bent and converged inside the first electrode plates to form a multi-tab structure, so as to reduce a head space of the electrode assembly and increase the energy density of the electrode assembly. When the first empty foil portion is connected to the middle area of the first main body portion in the third direction, along the third direction, the clearance spaces are both provided between the first main body portion and the two sides of the first empty foil portion. When the first empty foil portion is arranged in the edge area of the first main body portion in the third direction, along the third direction, a clearance space is provided between the first main body portion and one side of the first empty foil portion.

In some embodiments, along the third direction, the first main body portion is connected to the first empty foil portion in an arc-shaped transition manner at the clearance space. By making a connection between the first empty foil portion and the first main body portion as an arc for transition, stress concentration caused by the connection between the two being a sharp corner can be avoided, thereby reducing a probability of tearing of the first empty foil portion relative to the first main body portion, and improving the safety performance of the first electrode plate.

In some embodiments, a thickness H3 of the first protective layer satisfies: 5 µm ≤ H3 ≤ 3000 µm. In some embodiments, the thickness H3 of the first protective layer satisfies: 5 µm ≤ H3 ≤ 200 µm. By setting the thickness of the first protective layer to be within the above range, the overall thickness and weight of the first electrode plate can be reduced and the energy density of the electrode assembly can be increased on the basis of ensuring an isolation effect of the first protective layer on the first empty foil portion.

In some embodiments, along the thickness direction of the first electrode plate, the thickness H3 of the first protective layer located in the first accommodating groove is less than or equal to the depth H1 of the first accommodating groove. In some embodiments, the thickness H3 of the first protective layer and the depth H1 of the first accommodating groove satisfy: 5 µm ≤ H3 ≤ H1 ≤ 100 µm. In the above arrangement, the first protective layer located in the first accommodating groove does not exceed the first active material layer, so that a problem of thickness increase brought by arranging the first protective layer on the first active material layer can be effectively solved. In this way, the first protective layer can effectively protect the first empty foil portion, and the thickness of the first electrode plate is not increased, which ensures the energy density of the electrode assembly.

In some embodiments, viewed along the second direction, the first protective layer located in the first accommodating groove has a first side edge in the first direction, and the first accommodating groove has a second side edge in the first direction; and along the first direction, a distance D1 between the first side edge and the second side edge satisfies: 0 mm ≤ D1 ≤ 3 mm. In some embodiments, viewed along the second direction, the first protective layer located in the first accommodating groove has a third side edge and a fourth side edge in a third direction, the first accommodating groove has a fifth side edge and a sixth side edge, the third side edge and the fifth side edge are on a same side of the first protective layer, the fourth side edge and the sixth side edge are on the other same side of the first protective layer, and the first direction, the second direction, and the third direction are perpendicular to each other; along the third direction, a distance D2 between the third side edge and the fifth side edge satisfies: 0 mm ≤ D2 ≤ 3 mm; and/or along the third direction, a distance D3 between the fourth side edge and the sixth side edge satisfies: 0 mm ≤ D3 ≤ 3 mm. By controlling the distance D1, distance D2, and distance D3 to be within the above range, the first side edge, the third side edge, and the fourth side edge of the first protective layer can be ensured to be located in the first accommodating groove, so as to avoid thickness increase caused by the first protective layer covering the first active material layer not provided with the first accommodating groove. In addition, when the distance D1, distance D2, and/or distance D3 are/is greater than 0 mm, there is a gap between the first protective layer and a partial side wall of the first accommodating groove, and the gap provides a buffer and accommodation space for the first protective layer to expand when the first protective layer is heated.

In some embodiments, in the second direction, two surfaces of the first main body portion are both provided with first active material layers, each first active material layer is provided with one first accommodating groove, there are two first protective layers, one first protective layer is arranged on one surface of the first empty foil portion and one first accommodating groove, and the other first protective layer is arranged on the other opposite surface of the first empty foil portion and the other first accommodating groove. Through a structure in which the first accommodating grooves and the first protective layers are arranged on both sides of the first electrode plate in the second direction, when a plurality of first electrode plates and a plurality of second electrode plates are alternately arranged, the first protective layers on the both sides of the first electrode plate can both effectively protect the first empty foil portion, and the first accommodating grooves on the both sides can respectively accommodate the first protective layers on the both sides, to reduce the overall thickness of the first electrode plate.

In some embodiments, the first electrode plate is a positive electrode plate, and the second electrode plate is a negative electrode plate; and the second electrode plate includes a second current collector and a second active material layer, the second current collector includes a second main body portion and a second empty foil portion that are integrally formed, the second empty foil portion has a first end and a second end that are opposite to each other in the first direction, the first end of the second empty foil portion is connected to the second main body portion, the second end of the second empty foil portion extends in a direction away from the second main body portion, the first direction is an extension direction of the second empty foil portion, and the second empty foil portion not covered with the second active material layer constitutes a tab of the second electrode plate; the second active material layer is arranged on at least one surface of the second main body portion along the second direction; and along the first direction, a projection of the second main body portion in the second direction partially overlaps the first empty foil area, and the second end of the first protective layer extends the second main body portion. To prevent corrosion on the first empty foil portion caused by an electrochemical reaction between the first empty foil portion and the second active material layer of a part of the second electrode plate that extends the first electrode plate, the second end of the first protective layer is arranged to exceed an edge of the second electrode plate in the first direction, so that the first empty foil portion can be effectively protected.

In some embodiments, the second active material layer is provided with a second accommodating groove concave along the second direction; and viewed along the second direction, a partial edge of the second empty foil portion coincides with a partial edge of the second accommodating groove; and the electrode assembly further includes a second protective layer, a part of the second protective layer is arranged in the second accommodating groove, a part of the second protective layer is arranged on the second empty foil portion, and the second protective layer covers an edge at which the second empty foil portion coincides with the second accommodating groove. The second accommodating groove is arranged on the second active material layer to accommodate the part of the second protective layer, so that a height of the second protective layer protruding from the second active material layer in the second direction of the second electrode plate can be effectively reduced, and even the second protective layer does not protrude from the second active material layer. In this way, an overall thickness of the second electrode plate can be reduced, thereby reducing the overall thickness of the electrode assembly, and increasing the energy density of the electrode assembly.

In some embodiments, the first protective layer is made of at least one of polyimide, polypropylene, polyethylene terephthalate, and polyethylene material; and/or the second protective layer is made of polyimide, polypropylene, polyethylene terephthalate, and polyethylene material.

Another technical solution adopted in embodiments of this application is as follows: An electrochemical device is provided, and the electrochemical device includes an electrode assembly.

The electrode assembly according to this application includes a first electrode plate, a separator, a second electrode plate, and a first protective layer. The separator is arranged between the first electrode plate and the second electrode plate. The first electrode plate includes a first current collector and a first active material layer, the first electrode plate includes a first current collector and a first active material layer, the first current collector includes a first main body portion and a first empty foil portion, the first empty foil portion has a first end and a second end that are opposite to each other in a first direction, the first end of the first empty foil portion is connected to the first main body portion, the second end of the first empty foil portion extends in a direction away from the first main body portion, the first direction is an extension direction of the first empty foil portion, and the first empty foil portion constitutes a tab of the first electrode plate. The first active material layer is arranged on at least one surface of the first main body portion along a second direction, the second direction is a thickness direction of the first current collector, the first direction is perpendicular to the second direction, and the first active material layer is provided with a first accommodating groove concave along the second direction. A part of the first protective layer is arranged in the first accommodating groove, and a part of the first protective layer is arranged on a surface of the first empty foil portion. In the electrode assembly according to this application, an electrochemical reaction between an area that corresponds to the first empty foil portion and that is on the second electrode plate and the first empty foil portion can be prevented by arranging the part of the first protective layer on the first empty foil portion. Besides, by arranging the part of the first protective layer on the first active material layer, it can be ensured that an area between the first empty foil portion and the first active material layer can also be completely covered with the first protective layer. In addition, by accommodating the part of the first protective layer in the first accommodating groove provided on the first active material layer, a height of the first protective layer protruding from the first active material layer in the second direction of the first electrode plate can be effectively reduced, thereby decreasing a head thickness of the electrode assembly and increasing energy density of the electrode assembly.

### BRIEF DESCRIPTION OF DRAWINGS

To more clearly describe the technical solution in specific embodiments of this application, the accompanying drawings that need to be used in descriptions of the specific embodiments are briefly introduced below. In all of the accompanying drawings, similar elements or portions are generally identified by similar reference numerals. In the accompanying drawings, the elements or portions are not necessarily drawn to actual scale.
FIG. 1 is a schematic diagram of an electrode assembly according to an embodiment of this application;
FIG. 2 is an enlarged view of a part A, in FIG. 1, of a first electrode plate of the electrode assembly according to an embodiment of this application when the first electrode plate is not provided with a first protective layer;
FIG. 3 is a cross-sectional view of the electrode assembly according to an embodiment of this application along B-B in FIG. 1;
FIG. 4 is an enlarged view of a part A, in FIG. 1, of a first electrode plate of the electrode assembly according to an embodiment of this application;
FIG. 5 is an enlarged view of a part A, in FIG. 1, of a first electrode plate of an electrode assembly according to another embodiment of this application;
FIG. 6 is a cross-sectional view of an electrode assembly according to another embodiment of this application along B-B in FIG. 1;
FIG. 7 is a cross-sectional view of the electrode assembly according to an embodiment of this application along C-C in FIG. 1;
FIG. 8 is a schematic diagram in which a first empty foil portion is connected to a middle area of a first main body portion in an electrode assembly according to an embodiment of this application; and
FIG. 9 is a schematic diagram in which a first empty foil portion is connected to an edge area of a first main body portion in an electrode assembly according to an embodiment of this application.

### DETAILED DESCRIPTION

For ease of understanding this application, a more detailed description of this application is given below in conjunction with the accompanying drawings and specific embodiments. It should be noted that when an element is expressed as "fixed to" another element, it may be directly on the other element, or there may be one or more intervening elements therebetween. When an element is described as "connected" to another element, it may be directly connected to the other element, or there may be one or more intervening elements therebetween. Orientations or positional relationships indicated by the terms "upper", "lower", "inner", "outer", "vertical", "horizontal", and the like used in this specification are based on orientations or positional relationships shown in the drawings and are intended merely for the purpose of facilitating the descriptions of this application and to simplify the descriptions, and do not indicate or imply that the apparatus or element must have a particular orientation or be constructed and operated in a particular orientation, and therefore, are not to be construed as a limitation of this application. In addition, the terms "first", "second", and the like are used merely for the purpose of description and are not to be understood as indicating or implying relative importance.

Unless otherwise defined, all technical and scientific terms used herein have the same meanings as commonly understood by those skilled in the art of this application. Terms used in the description of this application are for the purpose of describing specific embodiments only and are not intended to limit this application. The term "and/or" as used herein includes any and all combinations of one or more related listed items.

Further, the technical features described below in different embodiments of this application may be combined with each other as long as they do not conflict with each other.

In the field of batteries, there are roughly two ways to form a tab of an electrode plate of an electrode assembly. A first way is to connect independent foil (copper foil, aluminum foil, or the like) to an independent current collector by welding to form the tab of the electrode plate, and a second way is to obtain a convex portion by cutting an empty foil area on a current collector, where the convex portion constitutes the tab of the electrode plate, and the tab and the current collector are integrally formed in this case. Currently, for the second way, an existing insulation protection manner for the tab is to coat/paste a protective layer after the empty foil area is cut. This protection manner is to ensure that the empty foil area close to an active material in the tab is not exposed, and therefore, a part of the protective layer needs to coincide with the active material. However, direct stacking of the protective layer and the active material in a thickness direction of the electrode plate leads to accumulation of a thickness of such a position of the electrode plate, resulting in increase of a head thickness of the electrode assembly, and great loss in energy density.

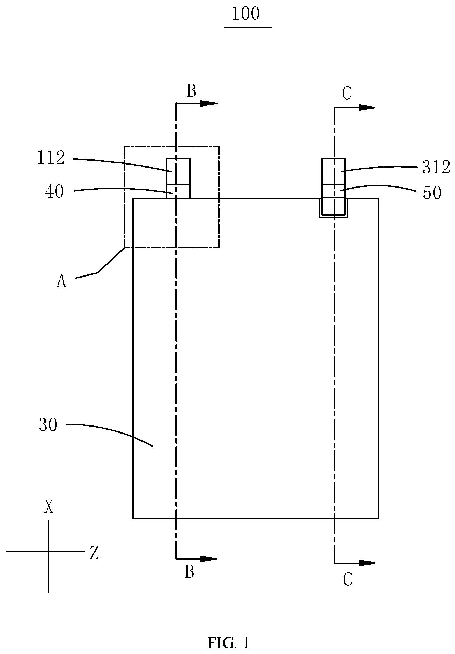

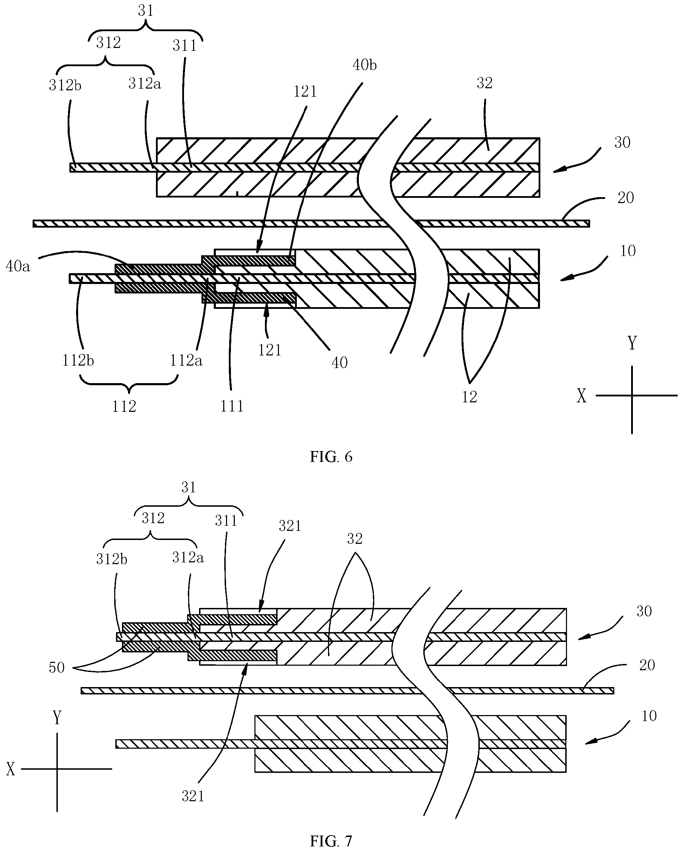

Referring to FIG. 1 and FIG. 6, this application provides an embodiment of an electrode assembly 100, and the electrode assembly 100 includes a first electrode plate 10, a separator 20, a second electrode plate 30, and a first protective layer 40. The separator 20 is arranged between the first electrode plate 10 and the second electrode plate 30, and the first electrode plate 10, the separator 20, and the second electrode plate 30 are stacked, to cause the electrode assembly 100 to form a stacked electrode assembly 100. Alternatively, the first electrode plate 10, the separator 20, and the second electrode plate 30 are stacked and then wound, to cause the electrode assembly 100 to form a wound electrode assembly 100.

For ease of description, the stacked electrode assembly 100 is used as an example for description below.

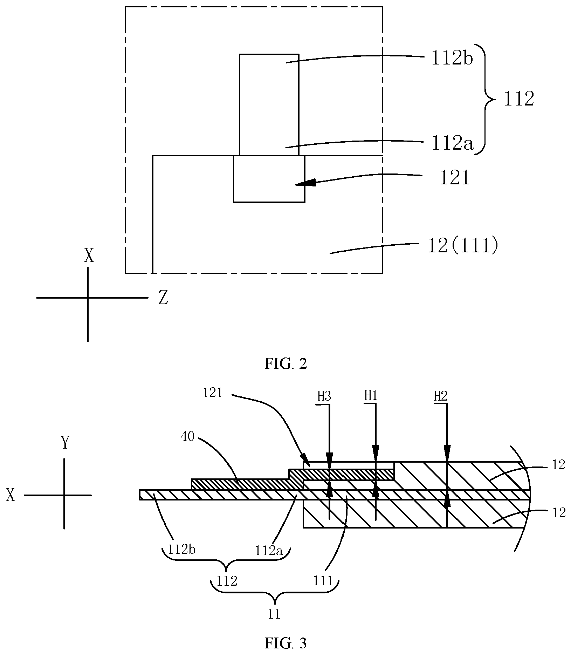

Referring to FIG. 2 and FIG. 3, the first electrode plate 10 includes a first current collector 11 and a first active material layer 12, the first current collector 11 includes a first main body portion 111 and a first empty foil portion 112, the first empty foil portion 112 has a first end 112a and a second end 112b that are opposite to each other in a first direction X, the first end 112a of the first empty foil portion 112 is connected to the first main body portion 111, the second end 112b of the first empty foil portion 112 extends in a direction away from the first main body portion 111 in the first direction X, in other words, the first direction X is an extension direction of the first empty foil portion 112 relative to the first main body portion 111, the first empty foil portion 112 is not covered with the first active material layer 12, and the first empty foil portion 112 constitutes a tab of the first electrode plate 10. The first end 112a of the first empty foil portion 112 can also be understood as a root of the tab in the first electrode plate 10, and the end of the first empty foil portion 112 that is connected to the first main body portion 111 is the head of the first electrode plate 10.

The first active material layer 12 is arranged on at least one surface of the first main body portion 111 along a second direction Y, the second direction Y is a thickness direction of the first current collector 11, and the first direction X and the second direction Y are perpendicular to each other. An area of the first active material layer 12 that is adjacent to the first empty foil portion 112 is provided with a first accommodating groove 121 concave along the second direction Y, and viewed along the second direction Y, a partial edge of the first empty foil portion 112 coincides with a partial edge of the first accommodating groove 121. The first accommodating groove 121 is located in a head area of the first electrode plate 10. The electrode assembly 100 includes a first protective layer 40, the first protective layer 40 includes a first part and a second part, the first part is arranged in the first accommodating groove 121, and the second part is arranged on the first empty foil portion 112, so that the first protective layer 40 can cover an edge at which the first empty foil portion 112 coincides with the first accommodating groove 121.

In the electrode assembly 100 according to this application, an electrochemical reaction between an area that is opposite to the first empty foil portion 112 in the second direction Y and that is located on the second electrode plate 30 and the first empty foil portion 112 can be prevented by arranging the part of the first protective layer 40 on the first empty foil portion 112. Besides, by arranging the part of the first protective layer 40 on the first active material layer 12, it can be ensured that an edge at which the first empty foil portion 112 and the first active material layer 12 are adjacent and coincide with each other can also be completely covered with the first protective layer 40, to avoid exposing the first end of the first empty foil portion 112. By providing the first accommodating groove 121 in an area at which the first empty foil portion 112 is adjacent to the first active material layer 12 to accommodate the part of the first protective layer 40, a height of the first protective layer 40 protruding from the first active material layer 12 in the second direction Y of the first electrode plate 10 can be effectively reduced. Because the first accommodating groove 121 and the first protective layer 40 are both located in the head area of the first electrode plate 10, a head thickness of the electrode assembly 100 can be reduced, and energy density of the electrode assembly 100 can be increased.

The electrode assembly 100 according to this application has the first direction X, the second direction Y, and a third direction Z that are perpendicular to each other. The first direction X refers to the direction in which the first empty foil portion 112 extends out of the first main body portion 111, the second direction Y refers to a stacking direction of the first electrode plate 10 and the second electrode plate 30, and the third direction Z refers to a width direction of the electrode assembly 100. In this specification, a first direction X, a second direction Y, and a third direction Z of the first electrode plate 10, the second electrode plate 30, the first protective layer 40, and a second protective layer 50 are consistent with the first direction X, the second direction Y, and the third direction Z of the electrode assembly 100. The second direction Y is also the thickness direction of the first current collector 11.

In some embodiments, referring to FIG. 2 and FIG. 3, along the second direction Y, the first accommodating groove 121 is concave towards the first main body portion 111 from a surface of the first active material layer 12 away from the first main body portion 111, and is not completely concave to a surface of the first main body portion 111, and the first active material layer 12 delimits the bottom of the first accommodating groove 121. A depth H1 of the first accommodating groove 121 and a thickness H2 of the first active material layer 12 satisfy: H1 < H2. It should be noted that the depth H1 of the first accommodating groove 121 and the thickness H2 of the first active material layer 12 are described based on the first accommodating groove 121 and the first active material layer 12 on one side of the first current collector. By retaining a part of the first active material layer 12 at the bottom of the first accommodating groove 121, when the part of the first protective layer 40 is arranged in the first accommodating groove 121, the first protective layer 40 can completely cover a boundary at which the first active material layer 12 coincides with the first empty foil portion 112, so as to avoid ineffective protective effect of the first protective layer 40 caused by exposure of a part of the first empty foil portion 112 due to a gap between the first protective layer 40 and the first active material layer 12.

It should be noted that, in a structure of directly arranging the first protective layer 40 on a surface of the first active material layer 12, the height of the first protective layer 40 protruding from the first active material layer 12 is too large; and after the first electrode plate 10 and the second electrode plate 30 are stacked, an accumulative thickness of the electrode assembly 100 is increased greatly, and the energy density of the electrode assembly 100 is greatly reduced. However, providing the first accommodating groove 121 on the first active material layer 12 can greatly reduce the height of the first protective layer 40 extending the first active material layer 12, and even eliminate the height of the first protective layer 40 extending the first active material layer 12, which significantly increases the energy density of the electrode assembly 100.

The first protective layer 40 is made of at least one of polyimide, polypropylene, polyethylene terephthalate, and polyethylene material. A form of the first protective layer 40 includes, but is not limited to, liquid glue curing molding, molten material curing molding, insulating adhesive tape, insulating adhesive layer, and the like.

In some embodiments, referring to FIG. 3, along the second direction Y, the depth H1 of the first accommodating groove 121 satisfies: 5 µm ≤ H1 ≤ 2000 µm. The thickness H2 of the first active material layer 12 satisfies: 20 µm ≤ H2 ≤ 5000 µm. In a further embodiment, the depth H1 of the first accommodating groove 121 satisfies: 5 µm ≤ H1 ≤ 100 µm. The thickness H2 of the first active material layer 12 satisfies: 20 µm ≤ H2 ≤ 200 µm. By setting the depth H1 of the first accommodating groove 121 to be within the range described above, the first accommodating groove 121 can have an accommodation capability in the second direction Y, thereby reducing the height of the first protective layer 40 protruding from the first active material layer 12 in the second direction Y. By setting the thickness H2 of the first active material layer 12 to be within the above range, not only the first active material layer 12 can have an enough thickness space for arranging a structure of the first accommodating groove 121, but also an overall thickness of the first electrode plate 10 can be controlled, thereby controlling an overall weight of the first electrode plate 10. In addition, a case in which the first active material layer 12 close to the first current collector 11 cannot participate in an electrochemical reaction when the first active material layer 12 is too thick can be prevented.

Along the second direction Y, a thickness H3 of the first protective layer 40 satisfies: 5 µm ≤ H3 ≤ 3000 µm. By setting the thickness H3 of the first protective layer 40 to be within the above range, the overall thickness and weight of the first electrode plate 10 can be reduced and the energy density of the electrode assembly 100 can be increased on the basis of ensuring an isolation effect of the first protective layer 40 on the first empty foil portion 112. In a further embodiment, the thickness H3 of the first protective layer 40 satisfies: 5 µm ≤ H3 ≤ 200 µm. On the basis of ensuring an insulation effect of the first protective layer 40, compared with curing molten insulating material to form the first protective layer 40, an insulating adhesive tape with a thickness of 5 µm to 200 µm can be directly attached to both a surface of the first empty foil portion and the first accommodating groove 121, so as to reduce waiting time, and improve efficiency of preparing the first electrode plate.

By providing the first accommodating groove 121 in an area of the first active material layer 12 close to the first empty foil portion 112 to accommodate the part of the first protective layer 40, the height of the first protective layer 40 protruding from the first active material layer 12 in the second direction Y can be reduced. In some embodiments, along the second direction Y, the first protective layer 40 may slightly extend the first active material layer 12 or may be flush with the first active material layer 12, or the first protective layer 40 may be lower than the first active material layer 12.

In an embodiment, along the second direction Y, the thickness H3 of the first protective layer 40 located in the first accommodating groove 121 is less than or equal to the depth H1 of the first accommodating groove 121. The thickness H3 of the first protective layer 40 and the depth H1 of the first accommodating groove 121 satisfy: 5 µm ≤ H3 ≤ H1 ≤ 100 µm. In this embodiment, the first protective layer 40 located in the first accommodating groove 121 does not exceed the first active material layer 12, so that a problem of thickness increase brought by arranging the first protective layer 40 on the first active material layer 12 can be effectively solved. In this way, the first protective layer 40 can effectively protect the first empty foil portion 112, and the thickness of the first electrode plate 10 is not increased, which ensures the energy density of the electrode assembly 100.

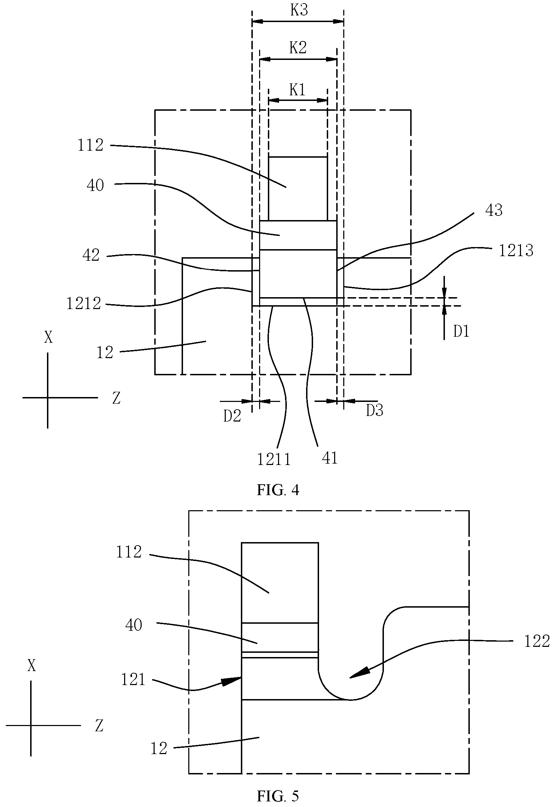

In some embodiments, as shown in FIG. 4, viewing the first electrode plate 10 along the second direction Y, a width K1 of the first empty foil portion 112, a width K2 of the first protective layer 40, and a width K3 of the first accommodating groove 121 in the third direction Z satisfy: K1 ≤ K2 ≤ K3. The width of the first accommodating groove 121 is greater than or equal to the width of the first protective layer 40, so that the first protective layer 40 can be completely accommodated in the first accommodating groove 121 in the third direction Z, so as to avoid increase of a thickness in the second direction Y caused by the first protective layer 40 covering an area not provided with the first accommodating groove 121. The width of the first protective layer 40 is greater than or equal to the width of the first empty foil portion 112, so that the first protective layer 40 can completely cover the first empty foil portion 112 in the third direction Z, thereby avoiding exposure of the first empty foil portion 112, and improving safety performance of the first electrode plate 10.

In some embodiments, refer to FIG. 4. In observation of the first electrode plate 10 along the second direction Y, the first protective layer 40 located in the first accommodating groove 121 has a first side edge 41 in the first direction X, and the first accommodating groove 121 has a second side edge 1211 in the first direction X. Along the first direction X, a distance D1 between the first side edge 41 and the second side edge 1211 satisfies: 0 mm ≤ D1 ≤ 3 mm. The first protective layer 40 located in the first accommodating groove 121 has a third side edge 42 and a fourth side edge 43 in the third direction Z, the first accommodating groove 121 has a fifth side edge 1212 and a sixth side edge 1213, the third side edge 42 and the fifth side edge 1212 are on a same side of the first protective layer 40, and the fourth side edge 43 and the sixth side edge 1213 are on the other same side of the first protective layer 40. Along the third direction Z, a distance D2 between the third side edge 42 and the fifth side edge 1212 satisfies: 0 mm ≤ D2 ≤ 3 mm. Along the third direction Z, a distance D3 between the fourth side edge 43 and the sixth side edge 1213 satisfies: 0 mm ≤ D3 ≤ 3 mm. By controlling the distance D1, distance D2, and distance D3 to be within the above range, the first side edge 41, the third side edge 42, and the fourth side edge 43 of the first protective layer 40 can be ensured to be located in the first accommodating groove 121, so as to avoid thickness increase caused by the first protective layer 40 covering the first active material layer 12 not provided with the first accommodating groove 121. In addition, when the distance D1, distance D2, and/or distance D3 are/is greater than 0 mm, there is a gap between the first protective layer 40 and a partial side wall of the first accommodating groove 121, and the gap provides a buffer and accommodation space for the first protective layer 40 to expand when the first protective layer 40 is heated.

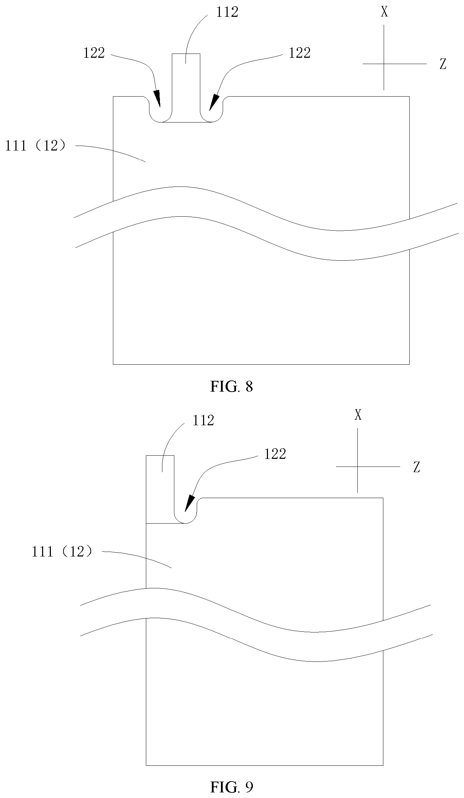

In some embodiments, as shown in FIG. 8 and FIG. 9, along the third direction Z, the first main body portion 111 and at least one side of the first empty foil portion 112 are spaced apart to form a clearance space 122. By arranging the clearance space 122 between the first empty foil portion 112 and the first main body portion 111 in the third direction Z, a root of the first empty foil portion 112 can be located in the first main body portion 111, so that a plurality of tabs (first empty foil portions 112) of a plurality of first electrode plates 10 can be bent and converged inside the first electrode plate 10 to form a multi-tab structure, so as to reduce a head space of the electrode assembly 100 and increase the energy density of the electrode assembly 100. When the first empty foil portion 112 is connected to the middle area of the first main body portion 111 in the third direction Z, along the third direction Z, the clearance spaces 122 are both provided between the first main body portion 111 and the two sides of the first empty foil portion 112. When the first empty foil portion 112 is arranged in the edge area of the first main body portion 111 in the third direction Z, along the third direction Z, a clearance space 122 is provided between the first main body portion 111 and one side of the first empty foil portion 112.

As shown in FIG. 8, that the first empty foil portion 112 is connected to the middle area of the first main body portion 111 in the third direction Z means: along the third direction Z, two sides of the first accommodating groove 121 both have first active material layers 12; and the clearance spaces 122 are both provided between the first main body portion 111 and the two sides of the first empty foil portion 112.

As shown in FIG. 9, that the first empty foil portion 112 is arranged in the edge area of the first main body portion 111 in the third direction Z means: an edge of the first empty foil portion 112 in the third direction Z coincides with an edge of the first main body portion 111 in the third direction Z; and along the third direction Z, one side of the first accommodating groove 121 is connected to the first active material layer 12, and the other side of the first accommodating groove 121 is flush with an edge of the first electrode plate 10.

In an embodiment in which the first empty foil portion 112 extends from the middle area of the first main body portion 111 or extends from the edge area of the first main body portion 111, the first main body portion 111 and the first empty foil portion 112 are connected in an arc-shaped transition manner at the clearance space 122. By arranging the clearance space 122 on the first main body portion 111, a connection between the first empty foil portion 112 and the first main body portion 111 can be an arc for transition, so that stress concentration caused by the connection between the two being a sharp comer can be avoided, thereby reducing a probability of tearing of the first empty foil portion 112 relative to the first main body portion 111, and improving the safety performance of the first electrode plate 10.

In some embodiments, as shown in FIG. 3, there is one first protective layer 40, and the first protective layer 40 is arranged on one side of the first electrode plate 10 close to the second electrode plate 30. In some other embodiments, as shown in FIG. 6, in the second direction Y, two surfaces of the first main body portion 111 are both provided with first active material layers 12, each first active material layer 12 is provided with one first accommodating groove 121, there are two first protective layers 40, one first protective layer 40 is arranged on one surface of the first empty foil portion 112 and one first accommodating groove 121, and the other first protective layer 40 is arranged on the other opposite surface of the first empty foil portion 112 and the other first accommodating groove 121. Through a structure in which the first accommodating grooves 121 and the first protective layers 40 are arranged on both sides of the first electrode plate 10 in the second direction Y, when a plurality of first electrode plates 10 and a plurality of second electrode plates 30 are alternately arranged, the first protective layers 40 on the both sides of the first electrode plate 10 can both effectively protect the first empty foil portion 112, and the first accommodating grooves 121 on the both sides can respectively accommodate the first protective layers 40 on the both sides, to reduce the overall thickness of the first electrode plate 10.

In some embodiments, referring to FIG. 6, the first electrode plate 10 is a positive electrode plate, and the second electrode plate 30 is a negative electrode plate. The second electrode plate 30 includes a second current collector 31 and a second active material layer 32, the second current collector 31 includes a second main body portion 311 and a second empty foil portion 312 that are integrally formed, the second empty foil portion 312 has a first end 312a and a second end 312b that are opposite to each other in the first direction X, the first end 312a of the second empty foil portion 312 is connected to the second main body portion 311, the second end 312b of the second empty foil portion 312 extends in a direction away from the second main body portion 311, and the first direction X is a direction in which the second empty foil portion 312 extends relative to the second main body portion 311. The second empty foil portion 312 not covered with the second active material layer 32 constitutes a tab of the second electrode plate 30. The second active material layer 32 is arranged on at least one surface of the second main body portion 311 along the second direction Y. Along the first direction X, a projection of the second main body portion 311 in the second direction Y partially overlaps the first empty foil area 112, and the second end of the first protective layer 40 extends the second main body portion 311. To be specific, an edge of the second main body portion 311 that is connected to the second empty foil portion 312 extends an edge of the first main body portion 111 that is connected to the first empty foil portion 112, a part of the first empty foil portion 112 and a part of the second active material layer are arranged opposite to each other in the second direction Y, and in the first direction X, the second end 40b of the first protective layer 40 exceeds the edge of the second main body portion 311 that is connected to the second empty foil portion 312.

By setting a size of the negative electrode plate to be greater than a size of the positive electrode plate, a negative active material on the negative electrode plate can completely cover a positive active material on the positive electrode plate, so that a phenomenon of lithium plating on the electrode assembly 100 can be effectively reduced. In this embodiment, to prevent corrosion on the first empty foil portion 112 caused by an electrochemical reaction between the first empty foil portion 112 and a second active material layer 32 of a part of the second electrode plate 30 that extends the first electrode plate 10, the second end 40b of the first protective layer 40 is arranged to exceed an edge of the second electrode plate 30 in the first direction X, so that the first empty foil portion 112 can be effectively protected, where the first end 40a of the first protective layer 40 and the second end 40b of the first protective layer 40 are arranged opposite to each other in the first direction X.

In some embodiments, referring to FIG. 7, an area of the second active material layer 32 close to the second empty foil portion 312 is provided with a second accommodating groove 321 concave along the second direction Y, and viewed along the second direction Y, a partial edge of the first end 312a of the second empty foil portion 312 coincides with a partial edge of the second accommodating groove 321. The electrode assembly 100 further includes a second protective layer 50, a part of the second protective layer 50 is arranged in the second accommodating groove 321, a part of the second protective layer 50 is arranged on the second empty foil portion 312, and the second protective layer 50 covers an edge at which the second empty foil portion 312 coincides with the second accommodating groove 321.

By arranging the second protective layer 50 at a common edge of the second empty foil portion 312 and the second active material layer 32, the second empty foil portion 312 can be effectively protected, and an electrochemical reaction between the second empty foil portion 312 and the first active material layer 12 on the first electrode plate 10 can be prevented. The second accommodating groove 321 is arranged on the second active material layer 32 to accommodate the part of the second protective layer 50, so that a height of the second protective layer 50 protruding from the second active material layer 32 in the second direction Y of the second electrode plate 30 can be effectively reduced, and even the second protective layer 50 does not protrude from the second active material layer 32. In this way, an overall thickness of the second electrode plate 30 can be reduced, thereby reducing the overall thickness of the electrode assembly 100, and increasing the energy density of the electrode assembly 100.

The second protective layer 50 is made of at least one of polyimide, polypropylene, polyethylene terephthalate, and polyethylene material. A form of the second protective layer 50 includes, but is not limited to, liquid glue curing molding, molten material curing molding, insulating adhesive tape, insulating adhesive layer, and the like.

The second accommodating groove 321 is provided on the second active material layer 32, and is similar or identical to the first accommodating groove 121 provided on the first active material layer 12 in terms of a structure, size, function, and the like. For a fitting relationship and size relationship between the part of the second protective layer 50 that is located in the second accommodating groove 321 and the second accommodating groove 321, refer to a fitting relationship and a size relationship between the part of the first protective layer 40 that is located in the first accommodating groove 121 and the first accommodating groove 121. Details are not described herein again.

This application further provides an embodiment of an electrochemical device, and the electrochemical device includes the electrode assembly 100 in any one of the foregoing embodiments. For a specific structure and function of the electrode assembly 100, refer to the foregoing embodiments. Details are not described herein again.

The electrode assembly 100 according to this application includes a first electrode plate 10, a separator 20, a second electrode plate 30, and a first protective layer 40, and the separator 20 is arranged between the first electrode plate 10 and the second electrode plate 30. The first electrode plate 10 includes a first current collector 11 and a first active material layer 12, the first current collector 11 includes a first main body portion 111 and a first empty foil portion 112 that are integrally formed, the first empty foil portion 112 has a first end and a second end that are opposite to each other in a first direction X, the first end of the first empty foil portion 112 is connected to the first main body portion 111, the second end of the first empty foil portion 112 extends in a direction away from the first main body portion 111, the first direction X is an extension direction of the first empty foil portion 112, and the first empty foil portion 112 not covered with the first active material layer 12 constitutes a tab of the first electrode plate 10. The first active material layer 12 is arranged on at least one surface of the first main body portion 111 along a second direction Y, the second direction Y is a thickness direction of the first current collector 11, the first direction X is perpendicular to the second direction Y, the first active material layer 12 is provided with a first accommodating groove 121 concave along the second direction Y, and viewed along the second direction Y, a partial edge of the first empty foil portion 112 coincides with a partial edge of the first accommodating groove 121. A part of the first protective layer 40 is arranged in the first accommodating groove 121, a part of the first protective layer 40 is arranged on the first empty foil portion 112, and the first protective layer 40 covers the edge at which the first empty foil portion 112 coincides with the first accommodating groove 121. In the electrode assembly 100 according to this application, by providing the first accommodating groove 121 on the first active material layer 12 to accommodate the part of the first protective layer 40, a height of the first protective layer 40 protruding from the first active material layer 12 in the second direction Y of the first electrode plate 10 can be effectively reduced, so that a head thickness of the electrode assembly 100 is reduced, and energy density of the electrode assembly 100 is increased.

What is described above is merely some embodiments of this application, and does not thereby limit the patent scope of this application. Equivalent structural or equivalent process variations made by using the content of the description and the accompanying drawings of this application, or the content hereof used directly or indirectly in other related technical fields, similarly fall within the patent protection scope of this application.

## Claims

1. An electrode assembly (100), **characterized by** comprising:
a first electrode plate (10), a separator (20), and a second electrode plate (30), wherein the separator (20) is arranged between the first electrode plate (10) and the second electrode plate (30);
the first electrode plate (10) comprises a first current collector (11) and a first active material layer (12), the first current collector (11) comprises a first main body portion (111) and a first empty foil portion (112), the first empty foil portion (112) has a first end (112a) and a second end (112b) that are opposite to each other in a first direction (X), the first end (112a) of the first empty foil portion (112) is connected to the first main body portion (111), the second end (112b) of the first empty foil portion (112) extends in a direction away from the first main body portion (111), the first direction (X) is an extension direction of the first empty foil portion (112), and the first empty foil portion (112) constitutes a tab of the first electrode plate (10); and
the first active material layer (12) is arranged on at least one surface of the first main body portion (111) along a second direction (Y), the second direction (Y) is a thickness direction of the first current collector (11), the first direction (X) is perpendicular to the second direction (Y), and the first active material layer (12) is provided with a first accommodating groove (121) concave along the second direction (Y); and
a first protective layer (40), wherein the first protective layer (40) comprises a first part and a second part, the first part is arranged in the first accommodating groove (121), and the second part is arranged on a surface of the first empty foil portion (112).

2. The electrode assembly (100) according to claim 1, **characterized in that**
along the second direction (Y), a depth H1 of the first accommodating groove (121) and a thickness H2 of the first active material layer (12) satisfy: H1 < H2.

3. The electrode assembly (100) according to claim 2, **characterized in that**
the depth H1 of the first accommodating groove (121) satisfies: 5 µm ≤ H1 ≤ 2000 µm; and
the thickness H2 of the first active material layer (12) satisfies: 20 µm ≤ H2 ≤ 5000 µm.

4. The electrode assembly (100) according to claim 3, **characterized in that**
the depth H1 of the first accommodating groove (121) satisfies: 5 µm ≤ H1 ≤ 100 µm; and
the thickness H2 of the first active material layer (12) satisfies: 20 µm ≤H2 ≤ 200 µm.

5. The electrode assembly (100) according to claim 2, **characterized in that**
viewed along the second direction (Y), a width K1 of the first empty foil portion (112), a width K2 of the first protective layer (40), and a width K3 of the first accommodating groove (121) in a third direction (Z) satisfy: K1 ≤ K2 ≤ K3, and the first direction (X), the second direction (Y), and the third direction (Z) are perpendicular to each other.

6. The electrode assembly (100) according to claim 1, **characterized in that**
along the third direction (Z), the first main body portion (111) and at least one side of the first empty foil portion (112) are spaced apart to form a clearance space (122).

7. The electrode assembly (100) according to claim 6, **characterized in that**
the first empty foil portion (112) is connected to a middle area of the first main body portion (111) in the third direction (Z); and along the third direction (Z), the first active material layer (12) is provided on both sides of the first accommodating groove (121); and
clearance spaces (122) are both provided between the first main body portion (111) and two sides of the first empty foil portion (112).

8. The electrode assembly (100) according to claim 6, **characterized in that**
an edge of the first empty foil portion (112) in the third direction (Z) coincides with an edge of the first main body portion (111) in the third direction (Z); and
along the third direction (Z), one side of the first accommodating groove (121) is connected to the first active material layer (12), and the other side of the first accommodating groove (121) is flush with an edge of the electrode plate.

9. The electrode assembly (100) according to claim 8, **characterized in that**
the first main body portion (111) is connected to the first empty foil portion (112) in an arc-shaped transition manner at the clearance space (122).

10. The electrode assembly (100) according to claim 3, **characterized in that** a thickness H3 of the first protective layer (40) satisfies: 5 µm ≤ H3 ≤ 3000 µm.

11. The electrode assembly (100) according to claim 10, **characterized in that** the thickness H3 of the first protective layer (40) satisfies: 5 µm ≤ H3 ≤ 200 µm.

12. The electrode assembly (100) according to claim 10, **characterized in that**
along the thickness direction of the first electrode plate (10), the thickness H3 of the first protective layer (40) is less than or equal to the depth H1 of the first accommodating groove (121).

13. The electrode assembly (100) according to claim 12, **characterized in that**
the thickness H3 of the first protective layer (40) and the depth H1 of the first accommodating groove (121) satisfy: 5 µm ≤ H3 ≤ H1 ≤ 100 µm.

14. The electrode assembly (100) according to claim 13, **characterized in that**
viewed along the second direction (Y), the first protective layer (40) located in the first accommodating groove (121) has a first side edge (41) in the first direction (X), and the first accommodating groove (121) has a second side edge (1211) in the first direction (X); and
along the first direction (X), a distance D1 between the first side edge (41) and the second side edge (1211) satisfies: 0 mm ≤ D1 ≤ 3 mm.

15. The electrode assembly (100) according to claim 2, **characterized in that**
viewed along the second direction (Y), the first protective layer (40) located in the first accommodating groove (121) has a third side edge (42) and a fourth side edge (43) in a third direction (Z), the first accommodating groove (121) has a fifth side edge (1212) and a sixth side edge (1213), the third side edge (42) and the fifth side edge (1212) are on a same side of the first protective layer (40), the fourth side edge (43) and the sixth side edge (1213) are on the other same side of the first protective layer (40), and the first direction (X), the second direction (Y), and the third direction (Z) are perpendicular to each other;
along the third direction (Z), a distance D2 between the third side edge (42) and the fifth side edge (1212) satisfies: 0 mm ≤ D2 ≤ 3 mm; and/or
along the third direction (Z), a distance D3 between the fourth side edge (43) and the sixth side edge (1213) satisfies: 0 mm ≤ D3 ≤ 3 mm.

16. The electrode assembly (100) according to any one of claims 1 to 15, **characterized in that**
in the second direction (Y), the first active material layer (12) is provided on two surfaces of the first main body portion (111), the two surfaces of the first main body portion (111) are both provided with first accommodating grooves (121), there are two first protective layers (40), one first protective layer (40) is arranged on one surface of the first empty foil portion (112) and one first accommodating groove (121), and the other first protective layer (40) is arranged on the other opposite surface of the first empty foil portion (112) and the other first accommodating groove (121).

17. The electrode assembly (100) according to claim 16, **characterized in that**
the first electrode plate (10) is a positive electrode plate, and the second electrode plate (30) is a negative electrode plate;
the second electrode plate (30) comprises a second current collector (31) and a second active material layer (320), the second current collector (31) comprises a second main body portion (112) and a second empty foil portion (312), the second empty foil portion (312) has a first end (112a) and a second end (112b) opposite to each other in the first direction (X), the first end (112a) of the second empty foil portion (312) is connected to the second main body portion (112), the second end (112b) of the second empty foil portion (312) extends in the direction away from the second main body portion (112), the first direction (X) is the extension direction of the second empty foil portion (312), and the second empty foil portion (312) not covered with the second active material layer (320) constitutes a tab of the second electrode plate (30); the second active material layer (320 is arranged on at least one surface of the second main body portion (112) along the second direction (Y); and
along the first direction (X), a projection of the second main body portion (112) in the second direction (Y) partially overlaps the first empty foil area, and the second end (112b) of the first protective layer (40) extends the second main body portion (112).

18. The electrode assembly (100) according to claim 17, **characterized in that**
the second active material layer (320) is provided with a second accommodating groove (321) concave along the second direction (Y); and
the electrode assembly (100) further comprises a second protective layer (50), a part of the second protective layer (50) is arranged in the second accommodating groove (321), and a part of the second protective layer (50) is arranged on a surface of the second empty foil portion (312).

19. The electrode assembly (100) according to claim 18, **characterized in that**
the first protective layer (40) is made of at least one of polyimide, polypropylene, polyethylene terephthalate, and polyethylene material; and/or the second protective layer (50) is made of polyimide, polypropylene, polyethylene terephthalate, and polyethylene material.

20. An electrochemical device, **characterized by** comprising the electrode assembly (100) according to any one of claims 1 to 19.
